# EUROPÄISCHE PATENTSCHRIFT

(11) **EP 1 808 040 B1**
(45) Veröffentlichungstag und Bekanntmachung des Hinweises auf die Patenterteilung: **30.11.2011**
(21) Anmeldenummer: 05782606.7
(22) Anmeldetag: 07.09.2005
(51) Int. Cl.: H04W 36/02

(54) **VERFAHREN ZUR AUSGABE EINES NUTZDATENSTROMS UND KOMMUNIKATIONSENDGERÄT ZUM EMPFANG UND ZUR AUSGABE EINES NUTZDATENSTROMS**
METHOD FOR EMITTING A USEFUL DATA FLOW AND COMMUNICATION TERMINAL FOR RECEIVING AND EMITTING A USEFUL DATA FLOW
PROCEDE POUR EMETTRE UN FLUX DE DONNEES UTILES ET TERMINAL DE COMMUNICATION POUR LA RECEPTION ET L'EMISSION D'UN FLUX DE DONNEES UTILES

(30) Priorität: 03.11.2004 DE 102004053093
(43) Veröffentlichungstag der Anmeldung: 18.07.2007
(73) Patentinhaber: Siemens Enterprise Communications GmbH & Co. KG, 81379 München (DE)
(72) Erfinder: LUCIONI, Gonzalo, 58454 Witten (DE)
(74) Vertreter: Fritzsche, Thomas
(86) Internationale Anmeldenummer: PCT/EP2005/054426
(87) Internationale Veröffentlichungsnummer: WO 2006/048349

(56) Entgegenhaltungen:
- EP-A- 0 865 026
- WO-A-98/09454
- US-A- 4 947 440
- US-A- 5 146 609
- US-A- 6 148 206
- US-B1- 6 252 919
- US-B1- 6 549 523

## Beschreibung

Die Erfindung betrifft ein Verfahren zur Ausgabe eines Nutzdatenstroms beim Wechseln zwischen einem ersten und einem zweiten Übertragungsweg gemäß dem Oberbegriff des Patentanspruchs 1 und ein Kommunikationsendgerät zum Empfang und zur Ausgabe eines Nutzdatenstroms gemäß dem Oberbegriff des Patentanspruchs 9.

Für eine mobile Kommunikation werden häufig Kommunikationsendgeräte eingesetzt, die mittels einer Funkverbindung mit einem leitungsgebundenen Kommunikationsnetzwerk verbunden sind. Beispiele für solche Anordnungen sind die bekannten Mobilfunknetze, z. B. das GSM-Netz, private Telefon-Netze (DECT-Anordnungen), WLAN-Anordnungen, etc. Allen diesen Anordnungen ist gemeinsam, dass bidirektionale Datenströme, in denen Nutzdaten (Audiodaten, Videodaten, etc.) übertragen werden, für die Kommunikation zwischen einer bzw. mehreren Basisstationen ("Access-Point") und den mobilen Kommunikationsendgeräten (Mobiltelefone, Schnurlos-Telefone, PDA's, Multimedia-PC's, etc.) verwendet werden.

In vielen Fällen ist es nicht möglich, mittels einer einzigen Basisstation (Access-Point) einen gewünschten geographischen Bereich vollständig abzudecken. Aus diesem Grund werden die mobilen Kommunikationsanordnungen in der Regel mehrzellig ausgeführt, so dass mehrere einander überlappende Funkbereiche verwendet werden, um eine flächendeckende Versorgung zu erreichen.

Eine besondere Anforderung bei den mehrzelligen Kommunikationsanordnungen auf Funkbasis ist die freie Beweglichkeit der mobilen Kommunikationsendgeräte. Ein solches Kommunikationsendgerät muss nicht nur innerhalb der gesamten Anordnung erreichbar sein, sondern ein Wechsel der Funkzelle sollte auch während des laufenden Betriebes ohne Unterbrechung der Kommunikationsverbindung bzw. ohne Gesprächsunterbrechung möglich sein. Dazu sind die einzelnen Funkzellen überlappend angeordnet, so dass eine Kommunikationsverbindung beim Wechsel des mobilen Kommunikationsendgerätes von einer Funkzelle zu einer benachbarten Funkzelle während des Aufenthaltes in einem überlappenden Funkbereich die genutzte Funkzelle wechseln kann.

Bei den Anordnungen mit mobilen Kommunikationsendgeräten hat sich als nachteilig erwiesen, dass zwischen dem Abbau der Kommunikationsverbindung in einer ersten Funkzelle und dem Aufbau bzw. der Fortführung der Kommunikationsverbindung in einer zweiten Funkzelle ein Zeitraum liegt, in dem die Kommunikationsverbindung kurzzeitig unterbrochen ist und während der keine Nutzdaten an das Kommunikationsendgerät bzw. von dem Kommunikationsendgerät übermittelt werden können. Diese kurzzeitige Unterbrechung wird meist als störend empfunden. Die beschriebenen Nachteile gelten gleichermaßen für den Übergang zwischen unterschiedlichen Netzen, beispielsweise für das "Handover" zwischen einem privaten (W)LAN- und einem öffentlichen GSM-Netz.

Diese Nachteile werden im Stand der Technik oft dadurch überwunden, dass die einzelnen Funkzellen von Kommunikationsanordnungen synchron zueinander betrieben werden. Beispielsweise werden dann die von dem Festnetz zu dem mobilen Kommunikationsendgerät übermittelten Nutzdaten zumindest zum Zeitpunkt der Umschaltung von allen Funkzellen gleichzeitig "parallel" übertragen, so dass bei der Umschaltung keine Übertragungspause durch den Abbau bzw. den Aufbau von Teil-Kommunikationsverbindungen - man spricht häufig auch von Nutzdatenströmen - entstehen. Nachteilig an dieser Vorgehensweise ist jedoch die erhöhte Netzlast und das Problem, dass mehrere Funk-Basisstationen (Access-Points) gleichzeitig mit denselben Nutzdaten (duplizierter Nutzdatenstrom) versorgt werden müssen. Das ist meist nur in Anordnungen mit wenigen, vorzugsweise von demselben Netzknoten gesteuerten Funkzellen realisierbar und wird daher in der Regel nur bei kleineren privaten "schnurlosen" Anordnungen so gemacht.

Inzwischen werden verstärkt nicht-synchrone Funknetze, z.B. funkbasierte "WLAN"-Datennetze nach IEEE 802.11, eingesetzt. Während für die Nicht-Echtzeit-Kommunikation, also für die klassische Datenübertragung, kurze Übertragungspausen während eines Wechsels der Funkzelle zumeist toleriert werden können, stellen die Unterbrechungen für die Echtzeit-Kommunikation, also beispielsweise für die Sprachdatenübertragung (VoIP = Voice-over-Internet-Protocol) eine Beeinträchtigung des Nutzungskomforts dar. Dieses Problem wird minimiert, indem die Unterbrechung beim Wechsel einer Funkzelle möglichst kurz gehalten wird. Dazu wird derzeit auch an neuen Standards gearbeitet, beispielsweise IEEE 802.11R "Fast Roaming" / "Fast Handoff". Durch eine Beschleunigung des "Handover"-Vorganges (Wechsel der Funkzelle) kann dabei die Beeinträchtigung der Kommunikationsverbindung zwar verringert, jedoch nicht vollständig eliminiert werden. Das gilt insbesondere bei mehrfachem Wechsel der Funkzellen, wobei die Laufzeitverzögerungen ("Delays") entweder kumulieren, oder Teilstücke (Fragmente) des Sprachdatenstroms verworfen werden müssen, um eine angemessene Gesamt-Verzögerungszeit nicht zu überschreiten.

Auch die Druckschrift US 6,549,523 B1 Gibbs et al. "Background noise contrast reduction for handovers involving a change of speech codec" befasst sich mit der Eliminierung von Störungen im Nutzungskomfort bei einem Handover. Hierbei wird das Problem adressiert, dass unterschiedliche Übertragungswege auch ein unterschiedliches Rauschverhalten aufweisen, so dass es bei einem Wechsel des Übertragungsweges zu einer Irritation des Benutzers kommen kann. Zur Lösung des Problems wird vorgeschlagen, in Sprechpausen jeweils eine "Rauschprobe" der beiden Übertragungswege aufzuzeichnen und in einem Übergangszeitraum während des Handovers ein Mischsignal aus den beiden aufgezeichneten "Rauschproben" auszugeben, wodurch zum einen ein fließender Übergang zwischen den unterschiedlich rauschenden Übertragungswegen gewährleistet sein soll, und zum anderen eine Empfangspause ausgefüllt werden kann.

Die Druckschrift US 6,148,206 Karanja et al. "Method for concealing a handover mute" zeigt ein Verfahren, bei dem eine Beeinträchtigung des Nutzungskomforts während einer Übertragungspause beim Wechsel einer Funkzelle dadurch ausgefüllt werden soll, dass der zuletzt empfangene Signalabschnitt noch einmal (wiederholt) wiedergegeben wird. Die Signalenergie ("Lautstärke") des wiederholt ausgegebenen Signalabschnitts soll dabei derart angepasst werden, dass sich ein möglichst nahtloser Übergang zu den zuvor bzw. nachfolgend ausgegebenen Signalabschnitten ergibt.

Es ist daher eine Aufgabe der vorliegenden Erfindung, die Beeinträchtigungen beim Wechsel eines Verbindungsweges während einer Kommunikationsverbindung zu minimieren.

Die Aufgabe wird für das Verfahren durch die Merkmale des unabhängigen Patentanspruchs 1 und für das Kommunikationsendgerät durch die Merkmale des unabhängigen Patentanspruchs 9 gelöst.

Die Lösung sieht ein Verfahren zur Ausgabe eines Nutzdatenstroms beim Wechsel zwischen einem ersten und einem zweiten Übertragungsweg vor, wobei bei einem Empfänger bei dem Wechsel zwischen einem Empfangsende eines ersten Teil-Nutzdatenstroms des ersten Übertragungsweges und einem Empfangsbeginn eines zweiten Teil-Nutzdatenstroms des zweiten Übertragungsweges eine Empfangspause für den Nutzdatenstrom auftritt, und wobei der Nutzdatenstrom empfängerseitig ausgegeben wird. Dabei wird bei der Ausgabe des Nutzdatenstroms die Empfangspause mit zusätzlichen Nutzdaten ausgefüllt, wobei die zusätzlichen Nutzdaten aus dem zuvor über den ersten Übertragungsweg empfangenen ersten Teil-Nutzdatenstrom erzeugt werden. Die zusätzlichen Nutzdaten werden erzeugt, indem zumindest ein Teil des ersten Nutzdatenstroms zeitlich gestreckt wird, wobei für die Ausgabe eine Mehrzahl neuer Datenpakete erzeugt wird, die jeweils aus Nutzdaten der ersten Datenpakete und aus weiteren, aus den Nutzdaten der ersten Datenpakete generierten Nutzdatenwerten bestehen.
Durch die Anwendung dieses Verfahrens erfolgt der Wechsel von dem ersten Übertragungsweg, z.B. erste Funkzelle, zu dem zweiten Übertragungsweg, z.B. zweite Funkzelle, für den Empfänger nahezu oder vollständig störungsfrei. Störende Lücken (Artefakte) werden durch das Verfahren ausgefüllt, so dass für den Empfänger zu jederzeit kontinuierlich ein Nutzsignal ausgegeben werden kann.

Die Lösung der Aufgabe sieht weiter ein Kommunikationsendgerät zum Empfang und zur Ausgabe eines Nutzdatenstroms vor, wobei der Nutzdatenstrom von einer ersten Verbindung auf eine zweite Verbindung umschaltbar ist. Dabei ist das Kommunikationsendgerät mit einer Erzeugungseinrichtung zur Erzeugung zusätzlicher Nutzdaten ausgestattet, und das Kommunikationsendgerät ist mit einer Mischeinrichtung zur gewichteten Addition der zusätzlichen Nutzdaten mit dem über die zweite Verbindung empfangenen Nutzdatenstrom versehen. Die Erzeugungseinrichtung ist zur zeitlichen Streckung zumindest eines Teiles des über die erste Verbindung empfangenen Nutzdatenstroms (A) eingerichtet, wobei für die Ausgabe eine Mehrzahl neuer Datenpakete erzeugbar ist, die jeweils aus Nutzdaten der ersten Datenpakete und aus weiteren, aus den Nutzdaten der ersten Datenpakete generierten Nutzdatenwerten bestehen. Durch den Einsatz eines solchen Kommunikationsendgerätes wird eine "Lücke" im Nutzdatenstrom beim Wechsel einer Kommunikationsverbindung, z.B. zwischen zwei Funkzellen, aufgefüllt. Dabei ist gleichgültig, ob die "Lücke" durch eine Verzögerung entsteht oder dadurch, dass Teile des Nutzdatenstroms (Datenpakete) verloren gehen. Durch die gewichtete Addition der zusätzlichen Nutdaten mit dem empfangenen Nutzdatenstrom wird ein "weicher" Übergang gewährleistet, wobei speziell die Gewichtung zur Aufrechterhaltung einer konstanten Signalenergie verwendet werden kann. Infolge der Vermeidung einer schwankenden durchschnittlichen Signalenergie werden Irritationen bei einem Empfänger vermieden.

Bei einem Empfänger bzw. Benutzer werden Irritationen vermindert oder vermieden, wenn die zusätzlichen Nutzdaten erzeugt werden, indem zumindest ein Teil des ersten Teil-Nutzdatenstroms zeitlich gestreckt wird. Dadurch wird die zeitliche Lücke beim Wechsel durch Nutzdaten gefüllt, welche zu einem großen Teil aus dem ersten Teil-Nutzdatenstrom stammen und deshalb im Idealfall einen realen Informationsgehalt besitzen, im Gegensatz zu der - allerdings einfach realisierbaren - Alternative, die zeitliche Lücke, also die Empfangspause, mit einem Rauschsignal o.ä. zu füllen.

Das Verfahren ist durch die Merkmale der abhängigen Patentansprüche 2 bis 8 vorteilhaft weiter ausgestaltet. Die dabei beschriebenen Merkmale und Vorteile gelten sinngemäß auch für das erfindungsgemäße Kommunikationsendgerät. Das Kommunikationsendgerät ist durch die Merkmale der abhängigen Patentansprüche 10 bis 12 vorteilhaft weiter ausgebildet, wobei deren Merkmale und Vorteile sinngemäß auch auf das erfindungsgemäße Verfahren anzuwenden sind.

Wenn bei der Ausgabe nach der Empfangspause für einen Übergangszeitraum ein aus den zusätzlichen Nutzdaten und dem zweiten Nutzdatenstrom zusammengesetzter Datenstrom ausgegeben wird, entsteht ein "weicher" Übergang, der häufig unmerklich ist und deshalb von einem Empfänger subjektiv als nicht störend empfunden wird. Dabei ist von Vorteil, wenn für die Erzeugung des zusammengesetzten Nutzdatenstroms die zusätzlichen Nutzdaten mit einem ersten veränderlichen Faktor gewichtet werden und der zweite Nutzdatenstrom mit einem zweiten veränderlichen Faktor gewichtet wird, wobei die Summe aus dem quadrierten ersten und dem quadrierten zweiten veränderlichen Faktor jeweils zumindest nahezu konstant ist. Dadurch wird eine weitgehend konstante Signalenergie gewährleistet, wobei diese für den Übergang konstante Signalenergie vorteilhaft der durchschnittlichen Signalenergie des ersten Teil-Nutzdatenstroms entspricht. Während also bei dem Wechsel Phasenverschiebungen, für die das menschliche Ohr wenig empfindlich ist, im begrenzten Maße auftreten können, werden Signalenergie-Schwankungen, also mithin Amplitudenschwankungen, für die das menschliche Ohr empfindlich ist, teilweise oder vollständig vermieden. In der Folge ergibt sich ein subjektiv angenehmer, oft unmerklicher Wechsel zwischen den Übertragungswegen.

Durch das "Auffüllen" der Empfangspause ergibt sich für den zweiten Teil-Nutzdatenstrom eine Verzögerung (Phasenverschiebung, Delay). Diese Verzögerung kann ausgeglichen werden, indem nach dem vollständigen Wechsel der Ausgabe auf den zweiten Teil-Nutzdatenstrom der zweite Teil-Nutzdatenstrom so lange zeitlich gestaucht wird, bis die in Folge der Empfangspause eingetretene Verzögerung ausgeglichen ist. Dies ist besonders vorteilhaft nach einem mehrfachen Wechsel der Übertragungswege, weil sich sonst die dabei jeweils auftretenden Empfangspausen (Verzögerungen) addieren (kumulieren) und somit zu ansteigenden Qualitätseinbußen führen.

Ein besonders häufiger Anwendungsfall ist gegeben, wenn als der Nutzdatenstrom ein digitales Audiosignal einer Sprachverbindung (VoIP-Verbindung) verwendet wird. In diesen Fällen können auch zellulare Kommunikationsnetzwerke, die nicht hinsichtlich der Sprachdatenübertragung optimiert sind (z.B. LAN/WLAN-Anordnungen), für Echtzeit-Kommunikationsverbindungen genutzt werden. Dabei ist die Mobilität eines Empfängers vorteilhaft dadurch gegeben, dass für zumindest einen der Übertragungswege eine Funkverbindung verwendet wird. Dabei lässt sich das Verfahren auch vorteilhaft für inhomogene Strukturen einsetzen, in denen gemischt leitungsgebundene und funkbasierte Übertragungswege wechselweise genutzt werden. Ein anderer wichtiger Anwendungsfall ist gegeben, wenn als der erste Übertragungsweg eine erste Funkzelle und als der zweite Übertragungsweg eine zweite Funkzelle eines mehrzelligen Funknetzwerkes verwendet wird, wobei der Wechsel für eine Übergabe einer Funkverbindung von der ersten zu der zweiten Funkzelle genutzt wird. Dabei werden insbesondere die Nachteile, die nicht-synchrone Funkzellenanordnungen bei der Echtzeit-Kommunikation aufweisen, vermindert oder sogar ganz vermieden.

Zur Ausführung des vorstehend beschriebenen Verfahrens wird vorteilhaft das erfindungsgemäße Kommunikationsendgerät verwendet, wobei dieses zur Realisierung eines möglichst unmerklichen Wechsel-Vorganges eine Erzeugungseinrichtung aufweist, welche zur zeitlichen Streckung des über die erste Verbindung empfangenen Nutzdatenstroms eingerichtet ist. Dadurch wird die Empfangspause mit "sinnvollen" Nutzdaten ausgefüllt. Die dabei auftretende Gesamt-Verzögerung (Delay) kann von dem Kommunikationsendgerät wieder ausgeglichen werden, wenn dieses eine Einrichtung zur zeitlichen Stauchung des über die zweite Verbindung empfangenen Nutzdatenstroms aufweist, welche so lange den zweiten Teil-Nutzdatenstrom zeitlich staucht, bis die in Folge der Empfangspause aufgetretene Verzögerung wieder ausgeglichen ist.

Die Beeinträchtigung bei der Ausgabe des Nutzdatenstroms wird weiter verringert, wenn das Kommunikationsendgerät eine Erfassungseinrichtung zur Erfassung von Sprechpausen in dem über die erste Verbindung empfangenen Nutzdatenstrom und/oder in einem zu sendenden Nutzdatenstrom aufweist, wobei die Erfassungseinrichtung zur Steuerung des Zeitpunktes für die Umschaltung anhand einer erfassten Sprechpause eingerichtet ist. Damit kann der Wechsel in eine der ohnehin häufig vorkommenden Sprechpausen "verschoben" werden, so dass die Wahrscheinlichkeit für eine hörbare Beeinträchtigung weiter verringert wird. Bei Nutzdatenströmen, welche für eine längere Zeitdauer keine Sprechpause oder andere Signalpausen aufweisen, kann darüber hinaus eine solche Pause beispielsweise durch "weiches" kurzzeitiges Dämpfen des Nutzdatenstroms "künstlich" erzeugt werden, wobei während dieser kurzzeitigen Dämpfung der Wechsel des Übertragungsweges vorgenommen wird.

Das Kommunikationsendgerät umfasst weiter vorteilhaft eine Steuerungseinrichtung zur Festlegung von Parametern, die die Gewichtung der zusätzlichen Nutzdaten und/oder des über die zweite Verbindung empfangenen Nutzdatenstroms bei der Addition bestimmen. Dadurch wird gewährleistet, dass bei dem Empfänger ein Nutzdatenstrom mit einer weitgehend konstanten Signalenergie ausgegeben wird, wobei Irritationen bei dem Empfänger durch eine schwankende Signalenergie ("Lautstärke") vermieden werden.

Ausführungsbeispiele des erfindungsgemäßen Verfahrens werden nachfolgend anhand der Zeichnungen erläutert, wobei diese gleichzeitig der Erläuterung eines erfindungsgemäßen Kommunikationsendgerätes dienen.

Dabei zeigt:
- Figur 1: in schematischer Darstellung eine Kommunikationsanordnung, bei der ein mobiles Kommunikationsendgerät zwischen zwei Funkzellen wechselt,
- Figur 2: in schematischer Darstellung die Nutzdatenpakete zweier Teil-Nutzdatensströme entlang einer Zeitachse, und
- Figur 3: in schematischer Darstellung ein Kommunikationsendgerät, welches zum Wechsel zwischen den zwei Teil-Nutzdatenströmen eingerichtet ist.

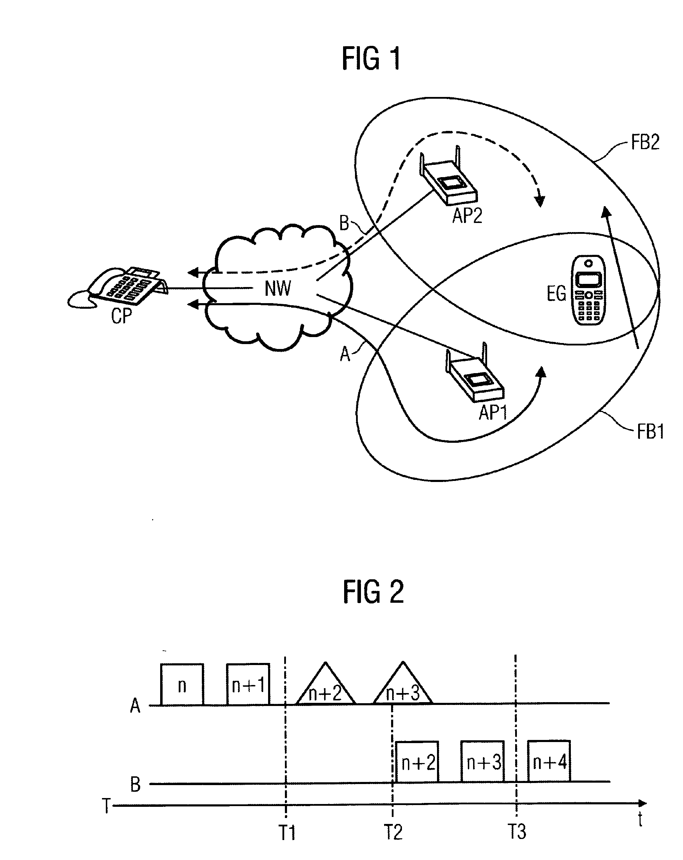

In Figur 1 ist eine Kommunikationsanordnung schematisch dargestellt, in der ein mobiles Kommunikationsendgerät EG mit einem stationären Kommunikationspartner CP verbunden ist. Dabei ist der Kommunikationspartner CP über einen nicht dargestellten Kommunikationsknoten an ein öffentliches Kommunikationsnetzwerk NW angeschlossen, während das mobile Kommunikationsendgerät EG über Funkbasisstationen AP1, AP2 ("Access-Points") an das Kommunikationsnetzwerk NW angeschlossen ist. Die Funkbasisstationen AP1, AP2 versorgen jeweils einen Funkbereich FB1, FB2 (Funkzelle), wobei die Funkbereiche FB1, FB2 einen gemeinsamen, überlappenden Bereich aufweisen.

Die Funkbasisstationen AP1, AP2 sind Teil eines asynchronen mehrzelligen Funknetzwerks, in diesem Fall eines sog. Wireless-LANs (WLAN). Die Nutzdaten für die Kommunikationsverbindung werden zwischen dem Kommunikationspartner CP und dem Kommunikationsendgerät EG zumindest auf den Teilstrecken zwischen den Funkbasisstationen AP1, AP2 und dem Kommunikationsendgerät EG jeweils gemäß des Internet-Protokolls (TCP-IP, UDP-IP) paketvermittelt übertragen.

Im Rahmen dieses Ausführungsbeispiels wird angenommen, dass das Kommunikationsendgerät EG während der bestehenden Kommunikationsverbindung von dem Funkbereich FB1 in den Funkbereich FB2 wechseln soll, was in der Figur 1 anhand eines Pfeils symbolisiert ist.

Die Kommunikationsverbindung zwischen dem Kommunikationspartner CP und dem mobilen Kommunikationsendgerät EG umfasst neben (hier nicht betrachteten) Signalisierungsmeldungen einen bidirektionalen Nutzdatenstrom, wobei im Rahmen dieses Ausführungsbeispiels nur der Nutzdatenstrom von dem Kommunikationspartner CP in Richtung des mobilen Kommunikationsendgerätes EG betrachtet werden soll. Dabei wird das Kommunikationsendgerät EG zunächst im Funkbereich FB1 von der Funkbasisstation AP1 in einer ersten Verbindung durch einen ersten Teil-Nutzdatenstrom A versorgt und nach dem Wechsel in dem Funkbereich FB2 durch die Funkbasisstation AP2 in einer zweiten Verbindung durch einen zweiten Teil-Nutzdatenstrom B. Der Wechsel wird vollzogen, während sich das Kommunikationsendgerät EG in dem Überlappungsbereich der Funkbereiche FB1, FB2 befindet.

Die in den Funkbereichen FB1, FB2 genutzte Funktechnik ist für eine Nicht-Echtzeitkommunikation optimiert, d.h., dass bei einem Wechsel von einer Funkzelle in eine benachbarte Funkzelle zwar eine zeitliche "Lücken" (Verzögerung) auftreten kann, dabei aber keine Nutzdaten bzw. Nutzdatenpakete verloren gehen. Anstelle des hier betrachteten WLAN-Funknetzes kann alternativ jedoch auch ein für Echtzeit-Kommunikationsverbindungen optimiertes Übertragungsverfahren zum Einsatz kommen. Bei einem solchen Verfahren wird aus Gründen der Laufzeitoptimierung oft keine Empfangsquittierung für Nutzdatenpakete vorgenommen (z.B. UDP-Protokoll). Dabei kann es dann vorkommen, dass insbesondere bei einem Wechsel der Funkzelle Nutzdatenpakete entweder verloren gehen oder aber derart verzögert beim Empfänger eintreffen, das diese nicht mehr berücksichtigt (wiedergegeben) werden können. Auch dabei können also zeitliche Lücken auftreten, die sowohl in Verzögerungen als auch in Daten-Verlusten begründet sein können.

In der Figur 2 sind schematisch über eine Zeitachse T die Teil-Nutzdatenströme A, B dargestellt, wobei die Teil-Nutzdatenströme A, B quadratisch dargestellte Datenpaketen n, n+1, n+3, n+4 mit einem digitalisierten Audiosignal (Audiodaten) aufweisen, die von dem Kommunikationspartner CP zu dem mobilen Kommunikationsendgerät EG übermittelt werden. Zum Zeitpunkt T1 wird der Wechsel von dem ersten Teil-Nutzdatenstrom A zu dem zweiten Teil-Nutzdatenstrom B initiiert, wobei nach dem Zeitpunkt T1 über den Teil-Nutdatenstrom A keine weiteren Datenpakete an das Kommunikationsendgerät EG übermittelt werden. Da erst nach dem Zeitpunkt T2 die nächsten quadratisch dargestellten Datenpakete n+2, n+3, n+4 bei dem Kommunikationsendgerät EG eintreffen, ergibt sich eine Empfangspause, die mit zusätzlichen Nutzdaten ausgefüllt wird. Im vorliegenden Fall ist es so, dass die letzten über den Teil-Nutzdatenstrom A eintreffenden Datenpakete n, n+1, die in einem Empfangsdatenpuffer vorliegen, derart zeitlich gestreckt werden, dass sich neue Datenpakete ergeben, die ihrerseits teilweise aus den Inhalten der ursprünglich übertragenden Datenpakete n, n+1 bestehen, und teilweise aus künstlich generierten zusätzlichen Informationen, die beispielsweise aus Echo-Signalanteilen und aus interpolierten Nutzdatenwerten bestehen. Verfahren zur "Streckung" von digitalisierten Audiosignalen sind im Stand der Technik hinlänglich bekannt, beispielsweise auch in der deutschen Patentanmeldung mit dem amtlichen Anmeldeaktenzeichen 103 270 57.4. Eine einfache Alternative stellt die Ausgabe eines "gefärbten" Rauschsignals dar, welches in seinem Frequenzspektrum dem durchschnittlichen Frequenzspektrum der zuvor empfangenen Nutzdaten entsprechen sollte.

Die zusätzlichen Datenpakete sind in der Figur 2 anhand von Dreiecken mit den Bezeichnungen n+2, n+3 gekennzeichnet. Ab dem Zeitpunkt T2 werden über den Teil-Nutzdatenstrom B "reale" Nutzdatenpakete n+2, n+3, n+4 empfangen, wobei auch diese in dem Empfangsdatenpuffer zwischengespeichert und danach zur Ausgabe gebracht werden. Es wird also zum Zeitpunkt T2 bei der Wiedergabe umgeschaltet zwischen den zusätzlichen Datenpaketen n+2, n+3 (anhand von Dreiecken dargestellt) und den neu empfangenen (quadratisch dargestellten) Datenpaketen n+2, n+3, n+4.

Um den Übergang "weicher" zu gestalten, wird in dem Übergangszeitraum zwischen T2 und T3 ein gemischtes Signal ausgegeben, wobei die Datenpakte des ersten Teil-Nutzdatenstroms A mit einem veränderlichen Faktor C₁ und die Datenpakete des Teil-Nutzdatenstroms B mit einem veränderlichen Faktor C₂ gewichtet (multipliziert) werden. Dabei sind die Signalverläufe für die Faktoren C₁, C₂ streng monoton fallend bzw. steigend. Die Summe der quadrierten Faktoren C₁, C₂ sollte dabei zu jedem Zeitpunkt zumindest näherungsweise einen konstanten Wert (in normierten Systemen ist das der Wert 1) ergeben, so dass ein Sprung in der Signalenergie des letztlich wiedergegebenen Ausgabesignals vermieden wird.

Vorteilhafterweise wird der zuvor beschriebene Vorgang in einer Sprechpause vorgenommen. Dabei macht man sich zunutze, dass für den Wechsel ein relativ langes Zeitfenster zur Verfügung steht, in dem jeder der beiden Funkbereiche FB1, FB2 das Kommunikationsendgerät EG sicher versorgen kann.

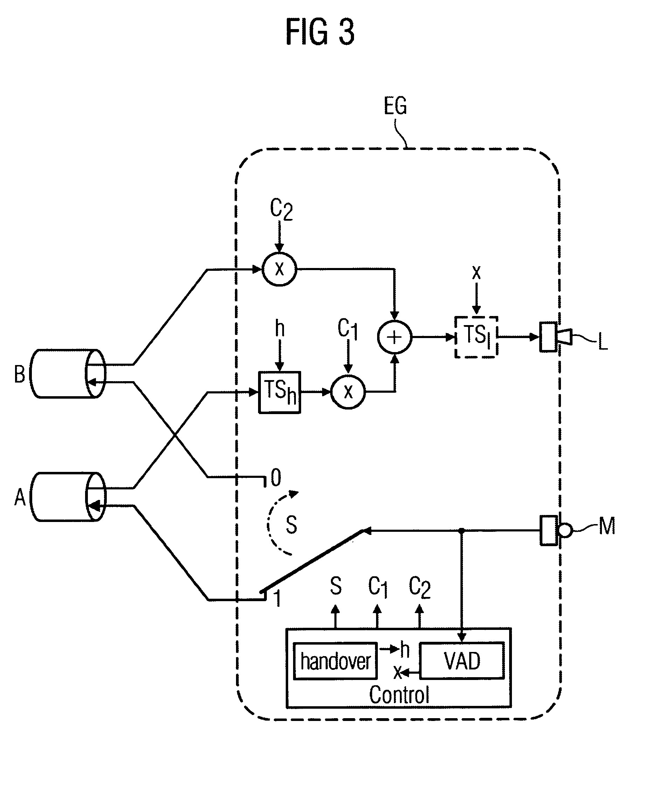

In der Figur 3 sind in schematischer Darstellung die wichtigsten Funktionsblöcke des Kommunikationsendgerätes EG dargestellt. Dabei werden die erzeugten Sprachdaten - als erzeugendes Element ist hierbei symbolisch das Mikrophon M dargestellt - abhängig von einer Schalterstellung 0,1 entweder über einen ersten Übertragungsweg A oder über einen zweiten Übertragungsweg B geleitet. Andererseits ist das Kommunikationsendgerät EG auch zum Empfang von Teil-Nutzdatenströmen A, B eingerichtet. Eine Steuerungseinrichtung "Control" enthält eine Erfassungseinrichtung VAD ("Voice Activity Detection") zur Überwachung der Sprechaktivität in einem Nutzdatenstrom und eine Logikeinrichtung "handover" zur Steuerung des Wechselvorganges. Als Ergebnis bestimmt die Steuerungseinrichtung "Control" den Zeitpunkt S des Umschaltens (also des Wechsels) und zu jedem Zeitpunkt den Wert der Faktoren (Parameter) C₁, C₂. Außerdem erzeugt die Steuerungseinrichtung "Control" - hier nicht dargestellte - Steuersignale x, h zur Steuerung einer Signal-Streckungseinrich-tung TSₕ und einer Signal-Stauchungseinrichtung TS₁. Während der eingehende Teil-Nutzdatenstrom A zunächst als Erzeugungseinrichtung die Signal-Streckungseinrichtung TSₕ durchläuft und danach mit dem Faktor C₁ gewichtet wird, werden die Nutzdaten des Teil-Nutzdatenstroms B mit dem Faktor C₂ gewichtet. Beide resultierende Signale werden in einer Mischeinrichtung "+" addiert, der durch die Steuerungseinrichtung Control gesteuerten Signal-Stauchungs-einrichtung TS₁ zugeführt und danach über einen Lautsprecher L ausgegeben. Dabei ist anzumerken, dass die Steuerungseinrichtung "Control" nicht zwangsläufig Teil des Endgerätes EG ist, sondern auch in einer anderen Instanz (Komponente) der Kommunikationsanordnung, auch in "verteilter" Form, angeordnet sein kann.

## Patentansprüche

1. Verfahren zur Ausgabe eines Nutzdatenstroms beim Wechsel zwischen einem ersten und einem zweiten Übertragungsweg,
wobei bei einem Empfänger bei dem Wechsel zwischen einem Empfangsende eines ersten Teil-Nutzdatenstroms (A) mit ersten Datenpaketen des ersten Übertragungsweges und einem Empfangsbeginn eines zweiten Teil-Nutzdatenstroms (B) mit zweiten Datenpaketen des zweiten Übertragungsweges eine Empfangspause für den Nutzdatenstrom auftritt, und
wobei der Nutzdatenstrom (A, B) empfängerseitig ausgegeben wird,
wobei bei der Ausgabe des Nutzdatenstroms (A, B) die Empfangspause mit zusätzlichen Nutzdaten ausgefüllt wird, wobei die zusätzlichen Nutzdaten aus dem zuvor über den ersten Übertragungsweg empfangenen ersten Teil-Nutzdatenstrom (A) erzeugt werden,
**dadurch gekennzeichnet, dass**
die zusätzlichen Nutzdaten erzeugt werden, indem zumindest ein Teil des ersten Teil-Nutzdatenstroms (A) zeitlich gestreckt wird, wobei für die Ausgabe eine Mehrzahl neuer Datenpakete erzeugt wird, die jeweils aus Nutzdaten der ersten Datenpakete und aus weiteren, aus den Nutzdaten der ersten Datenpakete generierten Nutzdatenwerten bestehen.

2. Verfahren nach Patentanspruch 1,
**dadurch gekennzeichnet,**
**dass** bei der Ausgabe nach der Empfangspause für einen Übergangszeitraum ein aus den zusätzlichen Nutzdaten und dem zweiten Nutzdatenstrom (B) zusammengesetzter Nutzdatenstrom ausgegeben wird.

3. Verfahren nach Patentanspruch 2,
**dadurch gekennzeichnet,**
**dass** für die Erzeugung des zusammengesetzten Nutzdatenstroms die zusätzlichen Nutzdaten mit einem ersten veränderlichen Faktor (C1) gewichtet werden und der zweite Nutzdatenstrom (B) mit einem zweiten veränderlichen Faktor (C2) gewichtet wird, wobei die Summe aus dem quadrierten ersten und dem quadrierten zweiten veränderlichen Faktor (C1, C2) konstant ist.

4. Verfahren nach einem der vorhergehenden Patentansprüche,
**dadurch gekennzeichnet,**
**dass** nach dem vollständigen Wechsel der Ausgabe auf den zweiten Teil-Nutzdatenstrom (B) der zweite Teil-Nutzdatenstrom (B) solange zeitlich gestaucht wird, bis die infolge der Empfangspause eingetretene Verzögerung ausgeglichen ist.

5. Verfahren nach einem der vorhergehenden Patentansprüche,
**dadurch gekennzeichnet**,
als der Nutzdatenstrom (A, B) ein digitalisiertes Audiosignal einer Sprachverbindung verwendet wird.

6. Verfahren nach Patentanspruch 5,
**dadurch gekennzeichnet,**
**dass** dieses Audiosignal hinsichtlich Sprechpausen überwacht wird und der Wechsel in einer Sprechpause vorgenommen wird.

7. Verfahren nach einem der vorhergehenden Patentansprüche,
**dadurch gekennzeichnet,**
**dass** für zumindest einen der Übertragungswege eine Funkverbindung verwendet wird.

8. Verfahren nach Patentanspruch 7,
**dadurch gekennzeichnet,**
**dass** als der erste Übertragungsweg eine erste Funkzelle und als der zweite Übertragungsweg eine zweite Funkzelle eines mehrzelligen Funknetzwerkes verwendet wird, wobei der Wechsel für eine Übergabe einer Funkverbindung von der ersten zu der zweiten Funkzelle genutzt wird.

9. Kommunikationsendgerät (EG) zum Empfang und zur Ausgabe eines Nutzdatenstroms (A, B),
wobei der Nutzdatenstrom (A, B) von einer ersten Verbindung auf eine zweite Verbindung umschaltbar ist,
**dadurch gekennzeichnet,**
**dass** das Kommunikationsendgerät (EG) mit einer Erzeugungseinrichtung (TSₕ) zur Erzeugung zusätzlicher Nutzdaten ausgestattet ist, und
**dass** das Kommunikationsendgerät (EG) mit einer Mischeinrichtung (+) zur gewichteten Addition der zusätzlichen Nutzdaten mit dem über die zweite Verbindung empfangenen Nutzdatenstrom (B) versehen ist,
**dadurch gekennzeichnet, dass**
die Erzeugungseinrichtung (TSₕ) zur zeitlichen Streckung zumindest eines Teiles des über die erste Verbindung empfangenen Nutzdatenstroms (A) eingerichtet ist, wobei für die Ausgabe eine Mehrzahl neuer Datenpakete erzeugbar ist, die jeweils aus Nutzdaten der ersten Datenpakete und aus weiteren, aus den Nutzdaten der ersten Datenpakete generierten Nutzdatenwerten bestehen.

10. Kommunikationsendgerät (EG) nach Patentanspruch 9,
**gekennzeichnet durch**
eine Einrichtung (TS₁) zur zeitlichen Stauchung des über die zweite Verbindung empfangenen Nutzdatenstroms (B).

11. Kommunikationsendgerät (EG) nach einem der vorhergehenden Patentansprüche,
**gekennzeichnet durch**
eine Erfassungseinrichtung (VAD) zur Erfassung von Sprechpausen in dem über die erste Verbindung (A) empfangenen Nutzdatenstrom und / oder in einem zu sendenden Nutzdatenstrom, wobei die Erfassungseinrichtung (VAD) zur Steuerung des Zeitpunktes für die Umschaltung anhand einer erfassten Sprechpause eingerichtet ist.

12. Kommunikationsendgerät (EG) nach einem der vorhergehenden Patentansprüche,
**gekennzeichnet durch**
eine Steuerungseinrichtung (Control) zur Festlegung von Parametern (C1, C2), die die Gewichtung der zusätzlichen Nutzdaten und / oder des über die zweite Verbindung empfangenen Nutzdatenstroms (B) bei der Addition bestimmen.

## Claims

1. A method for emitting a user-data stream when changing between a first and a second transmission path, wherein a reception pause for the user-data stream occurs at a receiver during the change between the end of the reception of a first partial user-data stream (A) with first data packets of the first transmission path and the beginning of the reception of a second partial user-data stream (B) with second data packets of the second transmission path, and
wherein the user-data stream (A, B) is output at the receiver end, wherein, during the output of the user-data stream (A, B), the reception pause is filled in with additional user data that are generated from the first partial user-data stream (A) previously received over the first transmission path,
**characterised in that**
the additional user data are generated by time-stretching at least part of the first partial user-data stream (A), with a plurality of new data packets, each consisting of user data of the first data packets and of other user-data values generated from the user data of the first data packets, being generated for the output.

2. A method according to claim 1,
**characterised in that**
during the output after the reception pause, a user-data stream made up of the additional user data and the second user-data stream (B) is output for a transitional period.

3. A method according to claim 2,
**characterised in that**
for the generation of the composite user-data stream the additional user data are weighted with a first variable factor (C₁) and the second user-data stream (B) with a second variable factor (C₂), whereby the sum of the squared first and the squared second variable factor (C₁, C₂) is constant.

4. A method according to any one of the preceding claims,
**characterised in that**
after the complete change of the output to the second partial user-data stream (B), the second partial user-data stream (B) is time-compressed until the delay caused by the reception pause is equalised.

5. A method according to any one of the preceding claims,
**characterised in that**
a digitised audio signal of a voice connection is used as the user-data stream (A, B).

6. A method according to claim 5, **characterised in that** this audio signal is monitored for speech pauses and the change is carried out in a speech pause.

7. A method according to any one of the preceding claims,
**characterised in that**
a radio link is used for at least one of the transmission paths.

8. A method according to claim 7,
**characterised in that**
a first radio cell is used as the first transmission path and a second radio cell of a multi-cell radio network is used as the second transmission path, with the change being used for a transfer of a radio link from the first to the second radio cell.

9. A communication terminal (EG) for receiving and emitting a user-data stream (A, B), wherein the user-data stream (A, B) can be switched over from a first connection to a second connection,
**characterised in that**
the communication terminal (EG) is equipped with a generating device (TSh) for generating additional user data, and
the communication terminal (EG) is provided with a mixing device (+) for the weighted addition of the additional user data with the user-data stream (B) received over the second connection,
**characterised in that** the generating device (TSh) is configured for the time-stretching of at least part of the user-data stream (A) received over the first connection, whereby a plurality of new data packets, each consisting of user data of the first data packets and of other user-data values generated from the user data of the first data packets, can be generated for the output.

10. A communication terminal (EG) according to claim 9, **characterised by** a device (TSi) for the time-compression of the user-data stream (B) received over the second connection.

11. A communication terminal (EG) according to any one of the preceding claims,
**characterised by**
a detection device (VAD) for detecting speech pauses in the user-data stream received over the first connection (A) and/or in a user-data stream that is to be sent, with the detection device (VAD) being configured to control the time for the switchover by reference to a detected speech pause.

12. A communication terminal (EG) according to any one of the preceding claims,
**characterised by**
a control device (Control) for defining parameters (C1, C2) which determine the weighting of the additional user data and/or of the user-data stream (B) received over the second connection during the addition.

## Revendications

1. Procédé pour émettre un flux de données utiles en cas de commutation entre un premier et un deuxième trajet de transmission, une pause de réception pour le flux de données utiles survenant dans un récepteur lors de la commutation entre une fin de réception d'un premier flux partiel de données utiles (A) ayant des premiers paquets de données du premier trajet de transmission et un début de réception d'un deuxième flux partiel de données utiles (B) ayant des deuxièmes paquets de données du deuxième trajet de transmission, et
le flux de données utiles (A, B) étant émis du côté récepteur,
lors de l'émission du flux de données utiles (A, B), la pause de réception étant remplie par des données utiles supplémentaires, les données utiles supplémentaires étant générées auparavant à partir du premier flux partiel de données utiles (A) reçu par le biais du premier trajet de transmission,
**caractérisé en ce que**
les données utiles supplémentaires sont générées par le fait qu'au moins une partie du premier flux partiel de données utiles (A) est étalée dans le temps, pour l'émission étant générée une pluralité de nouveaux paquets de données qui sont composés chacun de données utiles des premiers paquets de données et d'autres valeurs de données utiles générées à partir des données utiles des premiers paquets de données.

2. Procédé selon la revendication 1, **caractérisé en ce que**,
lors de l'émission, un flux de données utiles composé des données utiles supplémentaires et du deuxième flux de données utiles (B) est émis après la pause de réception pendant une période de transition.

3. Procédé selon la revendication 2, **caractérisé en ce que**,
pour la génération du flux de données utiles composé, les données utiles supplémentaires sont pondérées avec un premier facteur variable (C1) et le deuxième flux de données utiles (B) est pondéré avec un deuxième facteur variable (C2), la somme du premier facteur (C1) élevé au carré et du deuxième facteur (C2) élevé au carré étant constante.

4. Procédé selon l'une quelconque des revendications précédentes, **caractérisé en ce que**,
après la commutation complète de l'émission sur le deuxième flux partiel de données utiles (B), le deuxième flux partiel de données utiles (B) est comprimé temporellement j jusqu'à ce que le retard dû à la pause de réception survenue soit compensé.

5. Procédé selon l'une quelconque des revendications précédentes, **caractérisé en ce que**,
le flux de données utiles (A, B) employé est un signal audio numérisé d'une liaison phonie.

6. Procédé selon la revendication 5, **caractérisé en ce que**,
les pauses de diction de ce signal audio sont surveillés et la commutation est réalisée au cours d'une pause de diction.

7. Procédé selon l'une quelconque des revendications précédentes, **caractérisé en ce que** l'on emploie une liaison radioélectrique pour au moins un des trajets de transmission.

8. Procédé selon la revendication 7, **caractérisé en ce que** le premier trajet de transmission employé est une première cellule radioélectrique et le deuxième trajet de transmission employé est une deuxième cellule radioélectrique d'un réseau de radiocommunication à plusieurs cellules, la commutation étant utilisée pour un transfert d'une liaison de radiocommunication de la première cellule à la deuxième cellule.

9. Terminal de communication (EG) permettant de recevoir et d'émettre un flux de données utiles (A, B),
le flux de données utiles (A, B) pouvant être commuté d'une première liaison à une deuxième liaison,
**caractérisé**
**en ce que** le terminal de communication (EG) est équipé d'un dispositif de génération (TSh) servant à générer des données utiles supplémentaires, et
**en ce que** le terminal de communication (EG) est équipé d'un dispositif de mixage (+) servant à l'addition pondérée des données utiles supplémentaires avec le flux de données utiles (B) reçu par le biais de la deuxième liaison,
**caractérisé en ce que**
le dispositif de génération (TSh) est conçu pour réaliser un étalement temporel d'au moins une partie du flux de données utiles (A) reçu par le biais de la première liaison, une pluralité de nouveaux paquets de données pouvant être générés pour l'émission, lesquels paquets se composant chacun des données utiles des premiers paquets de données et d'autres valeurs de données utiles générées à partir des données utiles des premier paquets de données.

10. Terminal de communication (EG) selon la revendication 9, **caractérisé par** un dispositif (TS1) servant à une compression temporelle du flux de données utiles (B) reçu par le biais de la deuxième liaison.

11. Terminal de communication (EG) selon l'une quelconque des revendications précédentes, **caractérisé par** un dispositif de détection (VAD) servant à détecter des pauses de diction dans le flux de données utiles reçu par le biais de la première liaison (A) et/ou dans un flux de données utiles à envoyer, le dispositif de détection (VAD) étant conçu pour commander l'instant pour la commutation à l'aide d'une pause de diction détectée.

12. Terminal de communication (EG) selon l'une quelconque des revendications précédentes, **caractérisé par** un dispositif de commande servant à spécifier des paramètres (Cl, C2) qui, lors de l'addition, déterminent la pondération des données utiles supplémentaires et/ou du flux de données utiles (B) reçu par le biais de la deuxième liaison.
